# EUROPÄISCHE PATENTSCHRIFT

(11) **EP 0 560 960 B1**
(45) Veröffentlichungstag und Bekanntmachung des Hinweises auf die Patenterteilung: **14.06.1995**
(21) Anmeldenummer: 92920506.0
(22) Anmeldetag: 05.10.1992
(51) Int. Cl.: F01N 3/28

(54) **VORRICHTUNG ZUR REDUZIERUNG VON ABGAS-SCHADSTOFFEN, INSBESONDERE FÜR KRAFTFAHRZEUGE**
DEVICE FOR REDUCING THE LEVEL OF POLLUTANTS IN EXHAUST EMISSIONS, IN PARTICULAR VEHICLE EXHAUST EMISSIONS
DISPOSITIF POUR LA REDUCTION DES SUBSTANCES NOCIVES DE GAZ D'ECHAPPEMENT, EN PARTICULIER POUR VEHICULES AUTOMOBILES

(30) Priorität: 04.10.1991 DE 9112336 U
(43) Veröffentlichungstag der Anmeldung: 22.09.1993
(73) Patentinhaber: LEISTRITZ AG & CO. Abgastechnik, D-90765 Fürth (DE)
(72) Erfinder: KATTGE, Dieter, D-8501 Rothenberg (DE); STOEPLER, Walter, D-8522 Herzogenaurach (DE)
(74) Vertreter: Tergau, Enno, Dipl.-Ing.
(86) Internationale Anmeldenummer: DE9200842
(87) Internationale Veröffentlichungsnummer: WO9307366

(56) Entgegenhaltungen:
- EP-A- 0 328 293
- EP-A- 0 398 130
- DE-C- 3 514 150

## Beschreibung

Die Erfindung betrifft eine Vorrichtung zur Reduzierung von Abgas-Schadstoffen, insbesondere für Kraftfahrzeuge, mit den im Oberbegriff des Anspruches 1 genannten Merkmalen. Derartige, im folgenden einfach mit "Katalysator" bezeichnete Vorrichtungen bestehen im wesentlichen aus einem meist zweischaligen Gehäuse aus metallischem Werkstoff, in dem ein oder auch mehrere Katalysatorkörper gelagert sind. Der Katalysatorkörper ist von parallel zur Strömungsrichtung der Abgase verlaufenden, mit einem katalytisch wirkenden Material beschichteten Kanälen durchsetzt. Bei den genannten Katalysatoren besteht der Katalysatorkörper häufig aus keramischem Werkstoff. Derartige Keramikkörper, sog. Monolithe, sind naturgemäß sehr bruchempfindlich und weisen gegenüber metallischen Werkstoffen eine zu vernachlässigende Wärmeausdehnung auf.

Die Monolithe sind mit herkömmlichen, üblicherweise als Quellmatten bezeichneten Lagerungsmatten im Katalysatorgehäuse gelagert (vergl. mit EP-A-398 130). Diese Quellmatten werden mit Übermaß gegenüber der lichten Weite des Spaltraumes zwischen Monolith und Gehäusewandung montiert, woraus sich eine durch die elastischen Rückstellkräfte des Faservlies-Bindemittel-Systems hervorgerufene auf die Gehäusewandung und die Umfangsfläche des Monolithen gerichtete Druckkraft ergibt. Die in der Quellmatte z.B. in Form von Plättchen aus Hydroglimmer eingelagerten Expansionsteilchen haben nun die Eigenschaft, daß sich ihr Volumen ab einer Temperatur von etwa 400°C um ein Vielfaches vergrößert. Die Ursache für diese Volumenvergrößerung ist, daß sich das in den Zwischenschichten des Hydroglimmers gebundene Wasser irreversibel abspaltet, in den Dampfzustand übergeht, und die übereinandergestapelten Glimmer-Schichten quasi ziehharmonikaartig aufbläht. Der Wasserdampf ist dabei in von den auseinandergerückten GlimmerSchichten gebildeten Taschen gefangen. Beim Abkühlen auf Raumtemperatur geht zwar das Volumen der aufgeblähten Glimmerplättchen aufgrund der Druckabnahme und einem teilweisen Entweichen des in den Taschen eingeschlossenen Wasserdampfes bis zu einem gewissen Grad wieder etwas zurück, die von der Quellmatte auf Gehäusewandung und Monolith ausgeübte Flächenpressung ist aber gegenüber dem Zustand vor der ersten Inbetriebnahme wesentlich erhöht. Bei einer emeuten Erwärmung der Quellmatte auf Betriebstemperatur wirken die expandierten Glimmerplättchen durch Expansion des in den Taschen eingeschlossenen Gases bzw. Wasserdampfes wie Gasfedem.

Aufgrund der geschilderten Eigenschaften der Expansionsteilchen wird die auf die unterschiedlichen Temperaturausdehnungskoeffizienten von Gehäusematerial und Monolith zurückgehende Vergrößerung des sich zwischen ihnen befindlichen Spaltraums kompensiert. Im Falle von Quellmatten, denen zur Erhöhung ihrer Anfangselastizität ein Bindemittel zugefügt ist, wird zusätzlich die thermisch bedingte Verringerung der elastischen Rückstellkraft der Quellmatte kompensiert. Das in aller Regel aus einem gummielastischen Kunst- oder Naturstoff bestehende Bindemittel der Quellmatte wird nämlich bei den vorherrschenden Betriebstemperaturen durch Crack- und oxidative Vorgänge unter zumindest teilweisem Verlust seiner Masse und seiner elastischen Rückstellfähigkeit zersetzt bzw. abgebaut.

Der Nachteil der bekannten Quellmatten besteht nun darin, daß der gewünschte Expansionszustand nur dann eintritt, wenn mindestens einmal das Fahrzeug in einem Belastungsbereich gefahren wird, bei dem die durch die Abgase der Quellmatte zugeführte Wärmemenge für eine Temperaturerhöhung auf wenigstens 400°C ausreicht. Wird ein derartiger Betriebszustand über längere Zeit nicht erreicht, so kann sich der Träger-Körper unter ungünstigen Umständen, beispielsweise bei schlechten Straßenverhältnissen oder ruckartigem Fahren aus seiner Befestigung lösen und beim Aufprall auf metallische Teile des Katalysator-Gehäuses zumindest teilweise zerstört werden. Dieser Effekt kann z.B. bei Fahrzeugen mit großvolumigen Motoren und insbesondere dann auftreten, wenn zusätzlich aufgrund der örtlichen Straßenverkehrsordnung relativ niedrige Höchstgeschwindigkeiten vorgeschrieben sind, oder wenn Fahrzeuge mit kleinen oder mittleren Motorgrößen von Personen mit zurückhaltender Fahrweise gesteuert werden.

Die Aufgabe der vorliegenden Erfindung ist es, Katalysatoren vorzusehen, mit denen dieser Nachteil vermieden werden Kann. Diese Aufgabe wird durch die kennzeichnenden Merkmale des Anspruches 1 gelöst.

Danach ist in dem Spaltraum zwischen Katalysator-Gehäuse und Katalysatorkörper eine Zusatzheizung vorgesehen, mit der die Quellmatte unabhängig vom Betriebszustand des Fahrzeugmotors bzw. der Betriebstemperatur im Katalysatorgehäuse auf die Expansionstemperatur der Expansionsteilchen gebracht werden kann.

In Anspruch 3 ist eine vorteilhafte Ausführungsform der Erfindung angegeben, die praktisch ohne zusätzlichen konstruktiven Aufwand realisierbar ist. Danach ist ein exotherm reagierendes Stoffgemisch in dem Spaltraum zwischen Katalysatorgehäuse und Katalysatorkörper angeordnet, dessen Reaktion bei einer unterhalb der Expansionstemperatur liegenden Auslösetemperatur auslösbar ist, so daß bereits unter Schwachlastbedingungen des Fahrzeugs die Expansion der Expansionsteilchen bewirkt werden kann.

In den weiteren Ansprüchen sind Maßnahmen genannt, die verschiedene vorteilhafte Ausführungsformen des erfindungsgemäßen Katalysators gestatten. Besonders leicht technisch zu realisieren und wirkungsvoll sind die Lehren der Ansprüche 4 bis 11. Die mit einem Reaktionsgemisch beschichtete Folie kann in einfacher Weise bei der Montage des Katalysators entweder zwischen Monolith und Quellmatte und/oder zwischen Quellmatte und Gehäuse eingelegt oder bereits vor dem Einbau der Quellmatte mit dieser z.B. durch Verkleben verbunden werden. Durch die Maßnahmen der Ansprüche 8 bis 11 ist es möglich, zumindest auf einen Teil des Reduktionsmittels zu verzichten, da Trägerfolie, Klebstoff und Bindemittel selbst als Reduktionsmittel wirken.

Die Erfindung wird anhand von Ausführungsbeispielen und unter Zuhilfenahme der beigefügten Zeichnungen näher erläutert: Es zeigen:
Fig. 1 eine perspektivische Darstellung einer zum Teil geöffneten erfindungsgemäßen Katalysators, und
Fig. 2 eine schematische Schnittdarstellung, die die Anordnung von Katalysatorkörper, Zusatzheizung und Lagerungsmatte im Katalysatorgehäuse zeigt.

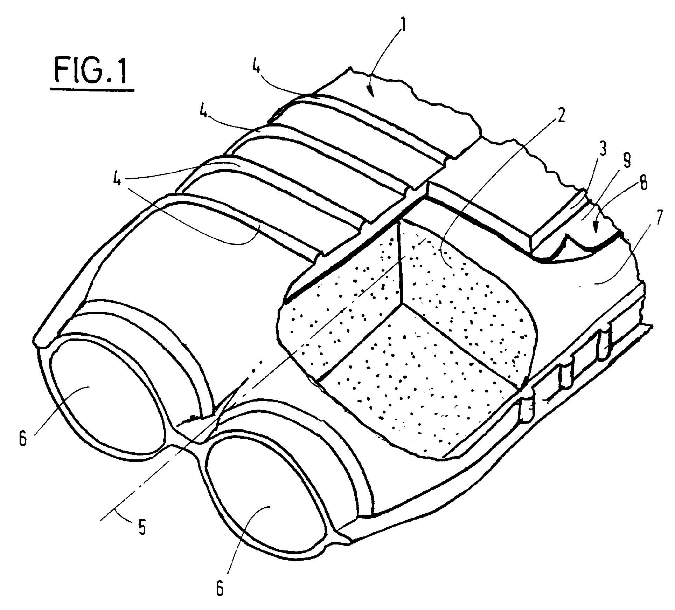

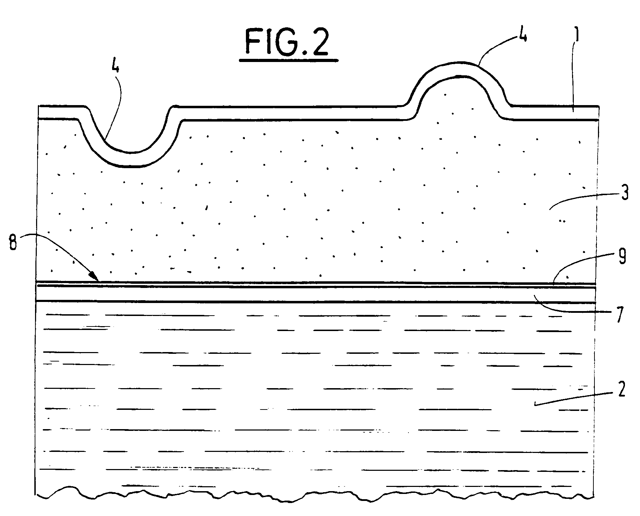

Wie aus Fig. 1 hervorgeht, besteht der erfindungsgemäße Katalysator aus einem aus zwei Halbschalen zusammengesetzten Gehäuse 1 und darin angeordnet einem Katalysatorkörper 2. Zwischen der Gehäusewandung und dem Katalysatorkörper 2 ist eine den Umfang des Katalysatorkörpers vollständig umgebende Quellmatte 3 angeordnet. Das Gehäuse 1 ist zur Erhöhung seiner Biege- und Verwindungsfestigkeit mit nach außen und nach innen (Fig. 2) vorspringenden Sicken (4) versehen. Insbesondere die nach innen vorspringenden Sicken erhöhen die Lagefixierung von Quellmatte 3 und Katalysatorkörper 2 in Richtung der Längsachse 5 des Gehäuses 1. An seiner dem Motor des Fahrzeugs zugewandten Seite ist das Gehäuse 1 mit zwei Einströmöffnungen 6 versehen, an die ein Doppel-Vorrohr anschließbar ist.

Zwischen dem Trägerkörper 2 und der Quellmatte 3 ist eine dessen Umfang vollständig umgebende Trägerfolie 7 angeordnet. Auf der der Lagerungsmatte zugewandten Seite 8 der Trägerfolie 7 ist eine die Zusatzheizung bildende Reaktionsschicht 9 mittels eines Klebers aufgebracht.

Die der Quellmatte 3 zugewandte Seite 8 der Trägerfolie 7 ist mit einem Acryl-Latex-Klebstoff beschichtet. Auf dieser Klebstoffschicht haftet das aus KMnO₄ und Cellulose bestehende pulverisierte Reaktionsgemisch. Pro qm Folie sind dabei 400 g des Reaktionsgemisches aufgebracht. Die Reaktionspartner KMnO₄ und Cellulose liegen in einem Massenverhältnis von 5,85 : 1 vor. Die Trägerfolie 7 selbst besteht aus Papier.

Die Quellmatten sind handelsübliche und für den in Rede stehenden Zweck vielfach eingesetzte Erzeugnisse. In dem genannten Beispiel wird eine Quellmatte mit eingelagertem Vermiculit, einem Flächengewicht von 4070 g/qm und einem Binderanteil (Acryl-Latex) von 6 % bis 8 % verwendet. Vermiculit ist ein aus Biotit durch Verwitterung entstandener expandierbarer Bläh- oder Hydroglimmer. Als expansionsfähige Stoffe können aber auch Graphitsalze verwendet werden. Bei solchen auch unter der Bezeichnung "Blähgraphite" bekannten Verbindungen sind in die Zwischenschichten des Graphit-Schichtgitters thermisch unter Abspaltung von Gasen zersetzbare Salze eingelagert.

Die gegebenenfalls bereits als paßgenauer Zuschnitt vorliegende Quellmatte ist ein- oder wahlweise beidseitig mit der Trägerfolie 7 verklebt derart, daß die Reaktionsschicht 9 der Quellmatte 3 zugewandt ist. Für diese Verklebung muß auf die Reaktionsschicht 9 kein zusätzlicher Klebstoff aufgetragen werden. Die auf der Oberfläche der Reaktionsschicht 9 vorhandene Restklebrigkeit reicht für eine Haftung an der Quellmatte in der Regel aus.

Nach dem Zusammenbau eines erfindungsgemäßen Katalysators kann das Reaktionsgemisch entweder noch vor dem Einbau in eine Fahrzeug-Abgasanlage durch Wärmezufuhr von außen aktiviert werden oder erst nach dem Einbau während der ersten Inbetriebnahme des Fahrzeugs. Zur Zündung des Reaktionsgemisches ist eine Temperatur von etwa 260°C notwendig. Diese Temperatur wird bereits im Schwachlastbetrieb des Fahrzeuges erreicht. Die dann ablaufende Reaktion besteht darin, daß das KMnO₄ zu Braunstein reduziert und die Cellulose der Beschichtung und zum Teil auch der Papier-Trägerfolie zu Kohlendioxyd und Wasser innerhalb von einigen Sekunden oxidiert werden. An dieser Reaktion können auch der auf der Trägerfolie und in der Quellmatte vorhandene Acryl-Latex als Reduktionsmittel teilnehmen.

Durch Variierung der pro qm Trägerfolie aufgebrachten Menge des Reaktionsgemisches kann die der Quellmatte 3 zugeführte Wärmemenge kontrolliert werden. Es ist beispielsweise nicht notwendig, daß bereits beim erstmaligen Erreichen der Expansionstemperatur die Gesamtzahl der in der Lagerungsmatte vorhandenen Glimmerplättchen aktiviert wird. Wie durch mehrere Versuchsreihen gezeigt werden konnte, reichen bereits je nach dem verwendeten Typ der Quellmatte etwa 30 bis 40 % aktivierter Glimmerplättchen aus, um eine ausreichende Lagefixierung des Katalysatorkörpers zu erreichen. Die noch verbleibenden nicht aktivierten Glimmerplättchen können dann für spätere Hochlastzyklen insofern als Sicherheitsreserve dienen, als eine weitere Aktivierung der Quellmatte erfolgen kann.

Ein weiteres Ausführungsbeispiel der Erfindung besteht darin, daß das Reaktionsgemisch direkt ein- oder beidseitig auf die Quellmatte, z.B. mittels eines Acryl-Latex-Klebers aufgebracht ist. Schließlich ist es auch möglich, ein Reaktionsgemisch in die Quellmatte selbst, beispielsweise in flüssiger Form einzubringen oder direkt bei der Mattenherstellung einzuarbeiten.

Abschließend sei angemerkt, daß für die Zusatzheizung beliebige exotherme Reaktionssysteme verwendet werden können. Beispielsweise ist denkbar, exotherm zerfallende Stoffe wie Peroxosäuren, Peroxide, Nitroverbindungen, substituierte Tetrazole etc. zu verwenden. Schließlich ist auch denkbar, als Zusatzheizung eine nach Art einer Heizdecke die Lagerungsmatte umgebende elektrische Widerstandsheizung vorzusehen, die etwa nur beim ersten Zünden des Fahrzeugmotors aktiviert werden könnte.
- 1: Gehäuse
- 2: Katalysatorkörper
- 3: Quellmatte ; Lagerungsmatte
- 4: Sicken
- 5: Längsachse
- 6: Einströmöffnung
- 7: Trägerfolie
- 8: Seite
- 9: Reaktionsschicht

## Patentansprüche

1. Vorrichtung zur Reduzierung von Abgas-Schadstoffen insbesondere für Kraftfahrzeuge, mit
- einem in einem Gehäuse (1) mit Umfangsabstand zur Gehäusewandung angeordneten Katalysator-Körper (2) und
- einer in dem Spaltraum zwischen Gehäusewandung und Katalysatorkörper (2) angeordneten Lagerungsmatte, insbesondere Quellmatte (3), mit
-- hitzebeständigen Fasern und
-- darin eingelagerten Expansionsteilchen insbesondere aus Hydroglimmer oder Graphitsalz, welche bei Erreichen einer durch die heißen Abgase hervorgerufenen Expansionstemperatur praktisch irreversibel in einen expandierten Zustand übergehen,
dadurch gekennzeichnet,
daß in dem Spaltraum zwischen Gehäuse (1) und Katalysatorkörper (2) eine Zusatzheizung angeordnet ist, mit der die Lagerungsmatte (3) auf die Expansionstemperatur aufheizbar ist.

2. Vorrichtung nach Anspruch 1,
dadurch gekennzeichnet,
daß die Zusatzheizung zwischen Lagerungsmatte (3) und Gehäuse (1) und/oder zwischen Lagerungsmatte (3) und Trägerkörper (2) oder zumindest teilweise in der Lagerungsmatte (3) selbst angeordnet ist.

3. Vorrichtung nach Anspruch 2,
dadurch gekennzeichnet,
daß die Zusatzheizung aus einem exotherm reagierenden Stoff oder Stoffgemisch besteht, dessen Reaktion bei einer unterhalb der Expansionstemperatur liegenden Auslösetemperatur ausgelöst wird.

4. Vorrichtung nach Anspruch 3,
dadurch gekennzeichnet,
daß der Stoff oder das Stoffgemisch ein- oder beidseitig auf einer Trägerfolie (7) aufgebracht ist, die zwischen Lagerungsmatte (3) und Gehäuse (1) und/oder zwischen Lagerungsmatte (3) und Katalysatorkörper (2) angeordnet ist.

5. Vorrichtung nach Anspruch 4,
dadurch gekennzeichnet,
daß die Trägerfolie (7) zur Fixierung des Stoffes oder des Stoffgemisches ein- oder beidseitig eine Klebstoffschicht aufweist.

6. Vorrichtung nach einem oder mehreren der vorgenannten Ansprüche 3 bis 5,
dadurch gekennzeichnet,
daß das Stoffgemisch aus mindestens einem Oxidationsmittel und mindestens einem Reduktionsmittel besteht.

7. Vorrichtung nach Anspruch 6,
dadurch gekennzeichnet,
daß das Oxidationsmittel KMnO₄ und das Reduktionsmittel Cellulose ist.

8. Vorrichtung nach einem oder mehreren der Ansprüche 4-7,
dadurch gekennzeichnet,
daß die Trägerfolie (7) aus einem Material besteht, das ein Reduktionsmittel ist.

9. Vorrichtung nach Anspruch 8,
dadurch gekennzeichnet,
daß die Trägerfolie (7) aus Papier besteht.

10. Vorrichtung nach einem oder mehreren der Ansprüche 5-9,
dadurch gekennzeichnet,
daß die Klebstoffschicht der Trägerfolie und/oder das Bindemittel der Lagerungsmatte (3) Reduktionsmittel sind.

11. Vorrichtung nach Anspruch 10,
dadurch gekennzeichnet,
daß der Klebstoff und das Bindemittel im wesentlichen aus Acryl-Latex bestehen.

12. Vorrichtung nach einem oder mehreren der vorgenannten Ansprüche 3 bis 5,
dadurch gekennzeichnet,
daß das Stoffgemisch aus Reaktionspartnern besteht, die in einer exothermen Polymerisationsreaktion miteinander reagieren.

13. Vorrichtung nach einem oder mehreren der vorgenannten Ansprüche 3 bis 5,
dadurch gekennzeichnet,
daß der Stoff ein unter Abspaltung von Atomen oder Molekülteilen exotherm zerfallender Stoff bzw. das Stoffgemisch eine Mischung solcher Stoffe ist.

14. Vorrichtung nach einem oder mehreren der vorgenannten Ansprüche 3 bis 13,
dadurch gekennzeichnet,
daß wenigstens ein Reaktionspartner des Stoffgemisches in der Lagerungsmatte (3) angeordnet ist.

15. Vorrichtung nach einem oder mehreren der vorgenannten Ansprüche 1 bis 14,
dadurch gekennzeichnet,
daß die Lagerungsmatte (3) ein Mineralfaservlies enthält.

16. Vorrichtung nach Anspruch 1 oder 2,
dadurch gekennzeichnet,
daß die Zusatzheizung eine elektrische Widerstandsheizung ist.

## Claims

1. Device for reducing exhaust-gas pollutants, in particular for motor vehicles, having
- a catalyst body (2) arranged in a housing (1) having a circumferential spacing from the wall of the housing and
- a mounting mat, in particular an expansion mat (3), arranged in the gap between the wall of the housing and the catalyst body (2), the mounting mat containing
-- heat-resistant fibres and
-- expansion particles, in particular of hydrous mica or graphite salt, embedded therein, which particles virtually irreversibly transform into an expanded state on reaching an expansion temperature resulting from the hot exhaust gases; characterized in that in the gap between the housing (1) and the catalyst body (2) there is arranged an additional heat source by means of which the mounting mat (3) can be heated to the expansion temperature.

2. Device according to Claim 1, characterized in that the additional heat source is arranged between the mounting mat (3) and the housing (1) and/or between the mounting mat (3) and the support body (2) or at least partially within the mounting mat (3) itself.

3. Device according to Claim 2, characterized in that the additional heat source comprises an exothermically reacting material or mixture of materials whose reaction is triggered at a trigger temperature below the expansion temperature.

4. Device according to Claim 3, characterized in that the material or the mixture of materials is applied on one or both sides of a support film (7) which is arranged between the mounting mat (3) and the housing (1) and/or between the mounting mat (3) and the catalyst body (2).

5. Device according to Claim 4, characterized in that the support film (7) has an adhesive layer on one or both sides for fixing the material or the mixture of materials.

6. Device according to one or more of the above Claims 3 to 5, characterized in that the mixture of materials comprises at least one oxidizing agent and at least one reducing agent.

7. Device according to Claim 6, characterized in that the oxidizing agent is KMnO₄ and the reducing agent is cellulose.

8. Device according to one or more of Claims 4-7, characterized in that the support film (7) comprises a material which is a reducing agent.

9. Device according to Claim 8, characterized in that the support film (7) comprises paper.

10. Device according to one or more of Claims 5-9, characterized in that the adhesive layer of the support film and/or the binder of the mounting mat (3) are reducing agents.

11. Device according to Claim 10, characterized in that the adhesive and the binder consist essentially of acrylic latex.

12. Device according to one or more of the above Claims 3 to 5, characterized in that the mixture of materials comprises reactants which react with one another in an exothermic polymerization reaction.

13. Device according to one or more of the above Claims 3 to 5, characterized in that the material is a material which decomposes exothermically with elimination of atoms or parts of molecules, or that the mixture of materials is a mixture of such materials.

14. Device according to one or more of the above Claims 3 to 13, characterized in that at least one reactant of the mixture of materials is present in the mounting mat (3).

15. Device according to one or more of the above Claims 1 to 14, characterized in that the mounting mat (3) contains a mineral fibre nonwoven.

16. Device according to Claim 1 or 2, characterized in that the additional heat source is an electric resistance heater.

## Revendications

1. Appareil pour réduire les produits nocifs dans les gaz d'échappement, en particulier pour des véhicules automobiles, comprenant:
- un corps de catalyseur (2) agencé dans un boîtier (1) avec un écartement périphérique vis-à-vis de la paroi du boîtier, et
- un matelas de montage, en particulier un matelas gonflé (3), agencé dans l'intervalle entre la paroi du boîtier et le corps de catalyseur (2), et comprenant:
- des fibres réfractaires, et
- des particules expansées inclues dans lesdites fibres, en particulier en mica expansé ou en sel graphité, qui se transforment dans un état expansé de manière pratiquement irréversible lorsqu'elles atteignent une température d'expansion provoquée par les gaz d'échappement brûlants, caractérisé en ce qu'il est prévu un dispositif de chauffage additionnel agencé dans l'intervalle entre le boîtier (1) et le corps de catalyseur (2), au moyen duquel le matelas de montage (3) peut être chauffé jusqu'à la température d'expansion.

2. Appareil selon la revendication 1, caractérisé en ce que le dispositif de chauffage additionnel est agencé entre le matelas de montage (3) et le boîtier (1) et/ou entre le matelas de montage (3) et le corps de support (2), ou au moins partiellement dans le matelas de montage (3) lui-même.

3. Appareil selon la revendication 2, caractérisé en ce que le dispositif de chauffage additionnel est constitué d'un produit ou d'un mélange de produits qui réagissent de manière exothermique, dont la réaction est déclenchée à une température de déclenchement au-dessous de la température d'expansion.

4. Appareil selon la revendication 3, caractérisé en ce que le produit ou le mélange de produits est appliqué d'un côté ou des deux côtés sur une feuille de support (7) qui est agencée entre le matelas de montage (3) et le boîtier (1), et/ou entre le matelas de montage (3) et le corps de catalyseur (2).

5. Appareil selon la revendication 4, caractérisé en ce que la feuille de support (7) présente une couche de colle sur un côté ou sur les deux afin de fixer le produit ou le mélange de produits.

6. Appareil selon l'une ou plusieurs des revendications précédentes 3 à 5, caractérisé en ce que le mélange de produits comprend au moins un produit oxydant et au moins un produit réducteur.

7. Appareil selon la revendication 6, caractérisé en ce que le produit oxydant est du KMnO₄, et en ce que le produit réducteur est de la cellulose.

8. Appareil selon l'une ou plusieurs des revendications 4 à 6, caractérisé en ce que la feuille de support (7) est réalisée en un matériau qui est un produit réducteur.

9. Appareil selon la revendication 8, caractérisé en ce que la feuille de support (7) est en papier.

10. Appareil selon l'une ou plusieurs des revendications 5 à 9, caractérisé en ce que la couche de colle de la feuille de support et/ou le liant du matelas de montage (3) sont des produits réducteurs.

11. Appareil selon la revendication 10, caractérisé en ce que la colle et le liant sont essentiellement constitués en acryl-latex.

12. Appareil selon l'une ou plusieurs des revendications précédents 3 à 5, caractérisé en ce que le mélange de produits est constitué de composantes d'une réaction, qui réagissent les unes avec les autres suivant une réaction de polymérisation exothermique.

13. Appareil selon l'une ou plusieurs des revendications précédentes 3 à 5, caractérisé en ce que le produit est un produit qui se décompose de manière exothermique avec dissociation des atomes ou de parties moléculaires, ou en ce que le mélange de produits est un mélange de tels produits.

14. Appareil selon l'une ou plusieurs des revendications précédentes 3 à 13, caractérisé en ce qu'au moins une composante de réaction du mélange de produits est disposée dans le matelas de montage (3).

15. Appareil selon l'une ou plusieurs des revendications précédentes 1 à 14, caractérisé en ce que le matelas de montage (3) contient une nappe de fibres minérales.

16. Appareil selon l'une ou l'autre des revendications 1 et 2, caractérisé en ce que le dispositif de chauffage additionnel est un élément chauffant à résistance électrique.
